# DEMANDE DE BREVET EUROPEEN

(11) **EP 1 665 967 A1**
(43) Date de publication de la demande: **07.06.2006**
(21) Numéro de dépôt: 05292507.0
(22) Date de dépôt: 25.11.2005
(51) Int. Cl.: A47J 27/21

(54) **Bouilloire avec élément de décoration amovible**

(30) Priorité: 03.12.2004 FR 0412876
(71) Demandeur: SEB SA, 69130 Ecully (FR)
(72) Inventeur: Dupuy, Christian, 25440 Abbans-Dessus (FR)
(74) Mandataire: Lemoine, Jean-Sébastien

(57) **Abrégé**

L'invention concerne une bouilloire (1) comprenant un corps (3) adapté à contenir un liquide. Selon l'invention, la bouilloire (1) comprend au moins un élément de décoration (16) adapté à être fixé de façon amovible à la surface extérieure de la paroi périphérique (7) du corps (3) de façon à en recouvrir au moins une portion, et des moyens de fixation adaptés à permettre la fixation de chaque élément de décoration (16) au corps (3).

## Description

La présente invention concerne un appareil électroménager adapté à chauffer un liquide, par exemple une bouilloire.

On connaît dans l'état de la technique une bouilloire comprenant un corps qui est adapté à contenir un liquide.

Cependant, une fois la bouilloire réalisée il n'est plus possible de modifier son aspect, ce qui peut se révéler être un inconvénient pour certains utilisateurs voulant adapter l'esthétique de leurs appareils électroménagers en fonction de leur cuisine, de l'aspect de leurs autres appareils électroménagers ou de leur envie.

Le présente invention vise à remédier à ce problème.

Selon la présente invention, la bouilloire comprend au moins un élément de décoration adapté à être fixé de façon amovible à la surface extérieure de la paroi périphérique du corps de façon à en recouvrir au moins une portion, et des moyens de fixation adaptés à permettre la fixation de chaque élément de décoration au corps.

Ainsi, selon cette invention, l'élément de décoration ou les éléments de décoration d'un même jeu, présentant un aspect esthétique particulier (par exemple, une couleur particulière), peut recouvrir la surface extérieure du corps de la bouilloire et permettre de changer l'apparence de cette dernière. A une bouilloire peut aussi être associée des jeux d'éléments de décoration ayant des aspects différents.

D'autres avantages et particularités de la présente invention apparaîtront dans la description du mode de réalisation donné à titre d'exemple non limitatif et illustré par les dessins mis en annexe.
La figure 1 est une vue en perspective éclatée d'une bouilloire conforme au mode de réalisation de la présente invention,
La figure 2 est une vue de côté de la bouilloire,
La figure 3 est une vue en coupe de la bouilloire selon la droite III-III de la figure 2,
La figure 4 est une vue en coupe de la zone IV de la figure 2,

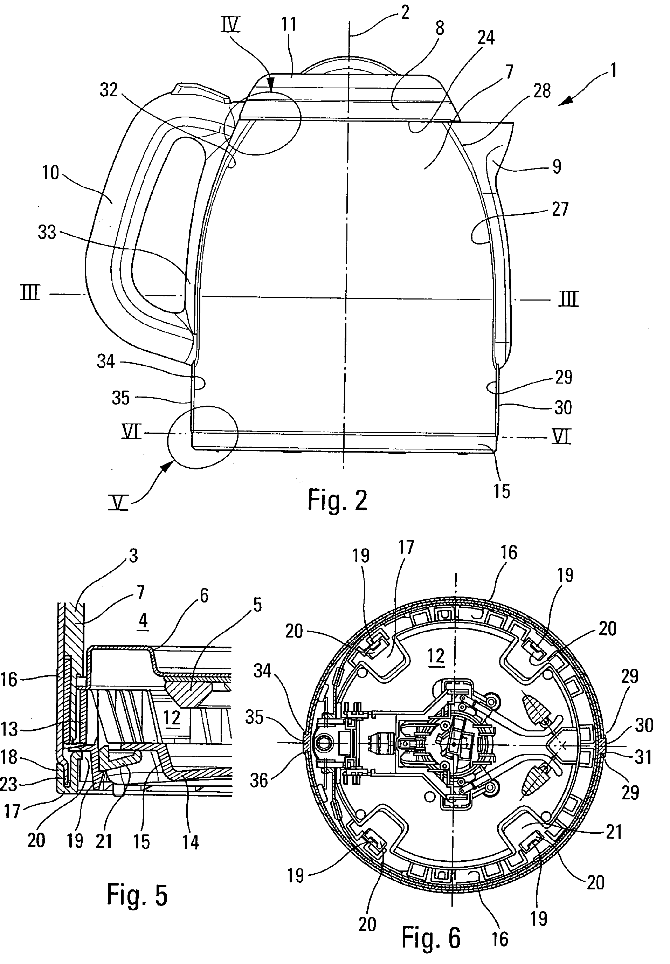

La figure 5 est une vue en coupe de la zone V de la figure 2, et
La figure 6 est une vue en coupe de la bouilloire selon la droite VI-VI de la figure 2.

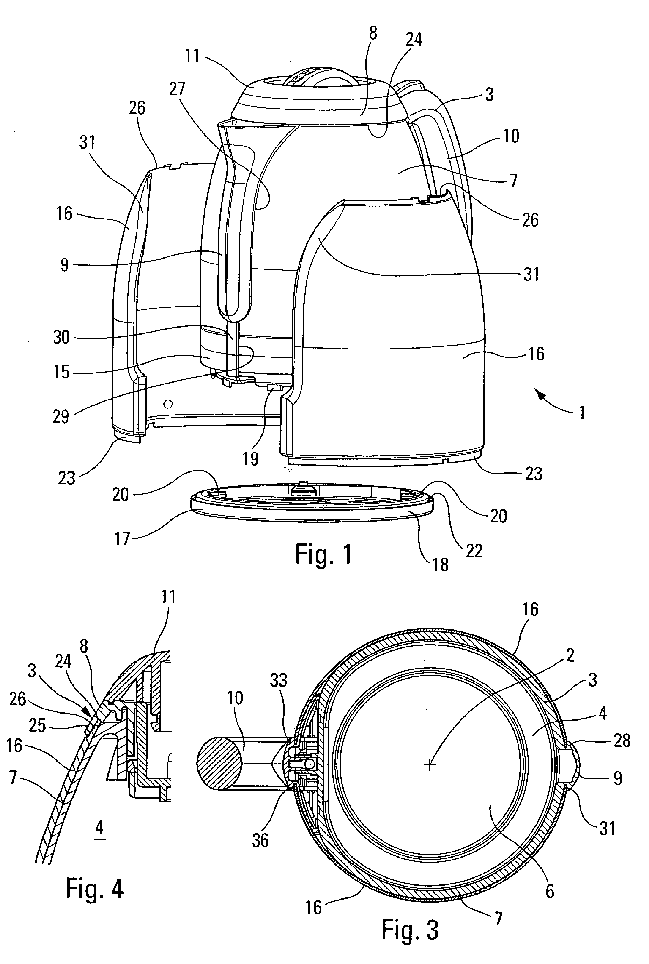

Comme on peut le voir à la figure 1, la bouilloire 1 conforme au présent mode de réalisation s'étend principalement verticalement selon un axe principal 2 et elle comprend un corps 3 qui comporte un réservoir 4 adapté à contenir un liquide et un organe de chauffe 5 adapté à chauffer le liquide dans le réservoir 4. Le réservoir 4 est délimité vers le bas par une paroi de fond 6 à la surface inférieure de laquelle est fixé l'organe de chauffe 5, et vers les côtés par une paroi latérale 7.

Le corps 3 comprend également une collerette supérieure 8 délimitant l'ouverture supérieure du réservoir 4, un bec verseur 9 facilitant le versement du liquide hors du réservoir 4, une poignée 10 permettant la manipulation de la bouilloire 1, et un couvercle 11 qui permet de fermer l'ouverture du réservoir et qui repose sur la collerette supérieure 8 quand il est en position fermée.

L'organe de chauffe 5 est enfermé dans une enceinte 12 délimitée, vers le haut, par la paroi de fond 6 du réservoir 4, et vers les côtés ainsi que vers le bas par, réciproquement, la paroi périphérique 13 et la paroi de fond 14 d'une collerette inférieure 15 solidarisée au corps 3.

La bouilloire 1 comprend au moins un élément de décoration 16 qui est adapté à être solidarisé de façon amovible à la surface extérieure de la paroi latérale 7 du corps 3 de façon à recouvrir une portion de surface.

Dans le présent mode de réalisation, la bouilloire 1 comprend deux éléments de décoration 16, chaque élément de décoration 16 étant adapté à recouvrir une portion de surface de la paroi latérale 7 qui lui est propre et qui s'étend, d'une part, sur sensiblement l'ensemble de la hauteur du corps 3 et, d'autre part, sur sensiblement la moitié de la périphérie de la bouilloire 1. La forme de chacun des deux éléments de décoration 16 correspond sensiblement à celle de la portion de surface correspondante. Dans le présent mode de réalisation, la bouilloire 1 ayant une forme générale de révolution cylindrique (en l'occurrence une forme sensiblement ogivale), chaque élément de décoration 16 est une coquille ayant une forme générale de révolution demi-cylindrique (en l'occurrence en forme de demi-ogive).

La bouilloire 1 comprend également des moyens de fixation adaptés à permettre la fixation de chaque élément de décoration 16 au corps 3.

Dans le présent mode de réalisation, les moyens de fixation comprennent un élément de verrouillage 17 qui est adapté à être fixé de façon séparable au corps 3, à maintenir chaque élément de décoration 16 solidarisé au corps 3 quand il est fixé à ce dernier, et à permettre la libération de chaque élément de décoration 16 quand il est séparé du corps 3. Dans le présent mode de réalisation, l'élément de verrouillage 17 est formé par une bague 17 dont le profil correspond sensiblement à celui de l'extrémité inférieure de la collerette inférieure 15 à laquelle il est adapté à être fixé. L'élément de verrouillage 17 comprend une paroi périphérique 18 qui est adaptée à prolonger vers le bas le corps 3.

Les moyens de fixation comprennent également, d'une part, des organes de fixation 19 portés par le corps 3, et, d'autre part, des organes complémentaires de fixation 20 adaptés à coopérer avec les organes de fixation 19 de façon à permettre la fixation et la séparation répétée de chaque élément de décoration au corps. Dans le présent mode de réalisation, les organes complémentaires de fixation 20 sont portées par l'élément de verrouillage 17, et leur coopération avec les organes de fixation 19 permettent la fixation de l'élément de verrouillage 17 au corps 3.

Dans le présent mode de réalisation, les organes de fixation 19 et les organes complémentaires de fixation 20 coopèrent par encliquetage. A cet effet, les organes de fixation 19 sont formés par des languettes 19 élastiquement déformables adaptées à s'encliqueter dans des ouvertures 20 réalisées dans l'élément de verrouillage 17. Les ouvertures 20 sont réalisées dans une paroi annulaire 21 qui fait saillie, vers le centre de la bague 17, de la paroi périphérique 18. De façon complémentaire, les languettes 19 font saillie vers le bas de la paroi de fond 14 de la collerette inférieure 15. Afin que ces languettes 19 ne supportent pas la bouilloire 1 quand celle-ci repose sur un support, la paroi périphérique 18 de l'élément de verrouillage 17 est suffisamment longue pour servir de support à la bouilloire 1.

Les moyens de fixation comprennent également, d'une part, des organes de solidarisation 23,26,31,36 portés par chaque élément de décoration 16, et d'autre part, des organes complémentaires de solidarisation 22,24,27,29,32,34 adapté à coopérer avec les organes de solidarisation 23, 26, 31, 36 de façon à permettre le maintien de chaque élément de fixation 16 contre la portion de surface correspondante.

Dans le présent mode de réalisation, pour chaque élément de décoration 16, l'organe de solidarisation 23, 26, 31, 36 est formé par au moins une partie de sa bordure périphérique 23, 26, 31, 36 (en l'occurrence par l'ensemble de sa bordure périphérique). De façon correspondante, l'organe complémentaire de solidarisation 22, 24, 27, 29, 32, 34 est formé par une rainure 22, 24, 27, 29, 32, 34 qui est adaptée à recevoir la bordure périphérique 23, 26, 31, 36 correspondante et qui s'étend le long d'au moins une partie de la périphérie de la portion de surface que recouvre l'élément de décoration 16 (en l'occurrence, le long de toute la périphérie de la portion de surface).

Une première partie de rainure 22 est réalisée le long d'un premier rebord 18 qui est porté par l'élément de verrouillage 17. Ce premier rebord 18 délimite, vers le bas, la portion de surface correspondante quand l'élément de verrouillage 17 est fixé au corps 3, la bordure périphérique inférieure 23 (en l'occurrence, de forme semi-cylindrique) de l'élément de décoration 16 correspondant étant adapté à être logé dans cette première partie de rainure 22. Le premier rebord 18 est formé par la surface périphérique 18 de la bague 17. La rainure qui est réalisée sur toute la circonférence de l'élément de verrouillage 17, forme la première partie de rainure 22 pour les deux éléments de décoration 16.

Une seconde partie de rainure 24 est réalisée le long d'un second rebord 25 qui est porté par la collerette supérieure 8 et qui délimite, vers le haut, la portion de surface correspondante. La bordure périphérique supérieure 26 (en l'occurrence, de forme semi-cylindrique) de l'élément de décoration 16 correspondant est adapté à venir en butée et à être logé dans cette seconde partie de rainure 24. La rainure qui est réalisée sur toute la circonférence de la collerette supérieure 8, forme la seconde partie de rainure 24 pour les deux éléments de décoration 16.

Une troisième partie de la rainure 27 est réalisée le long d'un troisième rebord 28 qui est porté par le bec verseur 9 et qui délimite, sur un premier côté, la portion de surface correspondante. La troisième partie de rainure 27 s'étend axialement vers le bas depuis la seconde partie de rainure 24 et est prolongée vers le bas par une quatrième partie de rainure 29 qui est réalisée le long d'un quatrième rebord 30 porté par la collerette inférieure 15. La quatrième partie de rainure 29 s'étend vers le bas de façon à rejoindre la première partie de rainure 22 quand l'élément de verrouillage 17 est fixé au corps 3. Une première bordure axiale 31 de l'élément de décoration 16 correspondant est adapté à coulisser le long des troisième et quatrième parties de rainure 27,29 et à y être logée. Le bec verseur 9 et le quatrième rebord 30 comportent, de chaque côté, une rainure qui forme les troisième et quatrième parties de rainure 27,29 pour les deux éléments de décoration 16.

Une cinquième partie de rainure 32 est réalisée le long d'un cinquième rebord 33 qui est porté par la poignée 10 et qui délimite, sur le deuxième côté, la portion de surface correspondante. La cinquième partie de rainure 32 s'étend axialement vers le bas depuis la seconde partie de rainure 24 et est prolongée vers le bas par une sixième partie de rainure 34 qui est réalisée le long d'un sixième rebord 35 porté par la collerette inférieure 15. La sixième partie de rainure 34 s'étend vers le bas de façon à rejoindre la première partie de rainure 22 quand l'élément de verrouillage 17 est fixé au corps 3. Une seconde bordure axiale 36 de l'élément de décoration 16 correspondant est adapté à coulisser le long des cinquième et sixième parties de rainure 32,34 et à y être logée. La poignée 10 et le sixième rebord 35 comportent, de chaque côté, une rainure qui forme les cinquième et sixième parties de rainure 32,34 pour les deux éléments de décoration 16.

La mise en place et le retrait de chaque élément de décoration 16 est particulièrement aisé. Ainsi, pour leur mise en place, après avoir retiré l'élément de verrouillage 17, il suffit de les présenter au niveau de la collerette inférieure 15, leurs bordures axiales 31,36 étant en face des quatrième et sixième parties de rainure 29,34 correspondantes, puis de les faire coulisser vers le haut le long des rainures troisième, quatrième, cinquième et sixième parties de rainure 27,29,32,34 axiales jusqu'à ce que les bordures supérieures 26 viennent en butée contre la seconde partie de rainure 24. Ensuite, il suffit de présenter l'élément de verrouillage 17, et le rapprocher, la première partie de rainure 22 recevant la bordure inférieure 23 et les ouvertures 20 recevant les languettes 19 par encliquetage.

Le retrait se fait selon le processus inverse

Il serait évidemment possible d'apporter de nombreuses modifications. Ainsi l'élément de verrouillage pourrait être fixé au corps par d'autres types de moyens de fixation simple ne nécessitant aucun appareillage particulier afin de laisser le changement des éléments de décoration à la portée de tout utilisateur : au lieu d'être un système d'encliquetage, il pourrait être un système de vissage (l'élément de verrouillage se vissant sur le corps) ou de boulonnage (des vis reliant l'élément de verrouillage et le corps). De même, la bouilloire pourrait ne pas présenter d'élément de verrouillage, chaque élément de décoration portant un organe de fixation coopérant avec un organe complémentaire de fixation porté par le corps.

## Revendications

1. Bouilloire (1) comprenant un corps (3) adapté à contenir un liquide, **caractérisée en ce qu'**elle comprend au moins un élément de décoration (16) adapté à être fixé de façon amovible à la surface extérieure de la paroi périphérique (7) du corps (3) de façon à en recouvrir au moins une portion, et des moyens de fixation adaptés à permettre la fixation de chaque élément de décoration (16) au corps (3).

2. Bouilloire (1) selon la revendication 1, **caractérisée en ce qu'**elle comprend deux éléments de décoration (16), chaque élément de décoration (16) étant adapté à recouvrir une portion de surface correspondante qui s'étend sur sensiblement l'ensemble de la hauteur du corps (3) et sur sensiblement la moitié de sa périphérie.

3. Bouilloire (1) selon la revendication 1 ou 2, **caractérisée en ce que** la forme de chaque élément de décoration (16) correspond sensiblement à celle de la portion de surface correspondante.

4. Bouilloire (1) selon l'une des revendications 1 à 3, **caractérisée en ce que** les moyens de fixation comprennent un élément de verrouillage (17) adapté à être fixé de façon séparable au corps (3), à maintenir chaque élément de décoration (16) solidarisé au corps (3) quand il est fixé à ce dernier, et à permettre la libération de chaque élément de décoration (16) quand il est séparé du corps (3).

5. Bouilloire (1) selon la revendication 4, **caractérisée en ce que** l'élément de verrouillage (17) est formé par une bague (17) dont le profil correspond sensiblement à celui de l'extrémité inférieure du corps (3) à laquelle elle est adaptée à être fixée, et qui comprend une paroi périphérique (18) adaptée à prolonger le corps (3) vers le bas.

6. Bouilloire (1) selon l'une des revendications 1 à 5, **caractérisée en ce que** les moyens de fixation comprennent, d'une part, des organes de fixation (19) portés par le corps (3), et, d'autre part, des organes complémentaires de fixation (20) adaptés à coopérer avec les organes de fixation (19) de façon à permettre la fixation et la séparation répétée de chaque élément de décoration (16) au corps (3).

7. Bouilloire (1) selon la revendication 6 dépendante de la revendication 4 ou 5, **caractérisée en ce que** les organes complémentaires de fixation (20) sont portées par l'élément de verrouillage (17).

8. Bouilloire (1) selon la revendication 6 ou 7, **caractérisée en ce que** les organes de fixation (19) et les organes complémentaires de fixation (20) coopèrent par encliquetage.

9. Bouilloire (1) selon la revendication 8 dépendante de la revendication 7, **caractérisée en ce que** les organes de fixation (19) sont formés par des languettes (19) élastiquement déformables adaptées à s'encliqueter dans des ouvertures (20) réalisées dans l'élément de verrouillage (17).

10. Bouilloire (1) selon la revendication 9 dépendante de la revendication 5, **caractérisée en ce que** les ouvertures (20) sont réalisées dans une paroi (21) faisant saillie de la paroi périphérique (18) de la bague (17), vers le centre de cette dernière, les languettes (19) faisant saillie vers le bas de l'extrémité inférieure du corps (3).

11. Bouilloire (1) selon l'une des revendications 1 à 10, **caractérisée en ce que** les moyens de fixation comprennent d'une part, des organes de solidarisation (23,26,31,36) portés par chaque élément de décoration (16), et d'autre part, des organes complémentaires de solidarisation (22,24,27,29,32,34) adapté à coopérer avec les organes de solidarisation (23,26,31,36) de façon à permettre le maintien de chaque élément de décoration (16) contre la portion de surface correspondante.

12. Bouilloire (1) selon la revendication 11, **caractérisée en ce que**, pour chaque élément de décoration (16), l'organe de solidarisation (23,26,31,36) est formé par au moins une partie (23,26,31,36) de sa bordure périphérique adaptée à s'engager dans une rainure (22,24,27,29,32,34) qui forme l'organe complémentaire de solidarisation (22,24,27,29,32,24) et qui s'étend le long d'au moins une partie de la périphérie de la portion de surface que recouvre l'élément de décoration (16).

13. Bouilloire (1) selon la revendication 12 dépendante de l'une des revendications 4, 5 ou 7 à 10, **caractérisée en ce qu'**une première partie (22) de la rainure est réalisée le long d'un premier rebord (18) qui est porté par l'élément de verrouillage (17) et qui est adapté à délimiter la portion de surface correspondante quand l'élément de verrouillage (17) est fixé au corps (3).

14. Bouilloire (1) selon la revendication 13 dépendante de la revendication 5, **caractérisée en ce que** le premier rebord (18) porté par l'élément de verrouillage (17) est formé par la surface périphérique (18) de la bague (17).

15. Bouilloire (1) selon l'une des revendications 12 à 14, **caractérisée en ce qu'**une partie (24,27,29,32,34) de la rainure est réalisée le long d'un rebord (25,28,30,33,35) qui est porté par le corps (3) et qui délimite la portion de surface correspondante.

16. Bouilloire (1) selon la revendication 15, **caractérisée en ce que** le rebord porté par le corps (3) comprend un second rebord (25) portée par une collerette supérieure (8) qui délimite l'ouverture de remplissage de la bouilloire (1).

17. Bouilloire (1) selon la revendication 15 ou 16, **caractérisée en ce que** le rebord porté par le corps (3) comprend un troisième (28) et un cinquième (33) rebords portés respectivement par un bec verseur (9) et par une poignée (10).

18. Bouilloire (1) selon la revendication 17, **caractérisée en ce que** les troisième (28) et cinquième (33) rebords sont prolongées vers le bas par des quatrième (30) et sixième rebords (35) portés par une collerette inférieure (15) qui forme l'extrémité inférieure du corps (3).
